(19) Europäisches Patentamt
European Patent Office
Office européen des brevets

(11) **EP 3 049 855 B1**

## (12) FASCICULE DE BREVET EUROPEEN

(45) Date de publication et mention
de la délivrance du brevet:
**31.05.2023 Bulletin 2023/22**

(21) Numéro de dépôt: **14776620.8**

(22) Date de dépôt: **23.09.2014**

(51) Classification Internationale des Brevets (IPC):
**G02B 5/30** *(2006.01)* **G02B 27/01** *(2006.01)*

(52) Classification Coopérative des Brevets (CPC):
**G02B 27/0172; G02B 5/30;** G02B 2027/0118;
G02B 2027/0178

(86) Numéro de dépôt international:
**PCT/EP2014/070272**

(87) Numéro de publication internationale:
**WO 2015/044148 (02.04.2015 Gazette 2015/13)**

(54) **LUNETTES À AFFICHAGE DE DONNÉES MUNIES D'UN ÉCRAN ANTI-ÉBLOUISSEMENT**

DATENANZEIGEBRILLEN MIT BLENDSCHUTZSCHILD

DATA DISPLAYING GLASSES HAVING AN ANTI-GLARE SCREEN

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **26.09.2013 FR 1359273**

(43) Date de publication de la demande:
**03.08.2016 Bulletin 2016/31**

(73) Titulaire: **Valeo Vision
93012 Bobigny Cedex (FR)**

(72) Inventeurs:
• **HUE, David
F-95430 Butry sur Oise (FR)**

• **FLEURY, Benoist
F-94300 Vincennes (FR)**

(74) Mandataire: **Valeo Visibility
Service Propriété Industrielle
c/o Valeo Vision
34, rue Saint André
93012 Bobigny (FR)**

(56) Documents cités:
**WO-A1-2012/176201 US-A1- 2008 186 604
US-A1- 2008 218 434 US-A1- 2009 213 282
US-A1- 2012 306 940 US-A1- 2013 113 973
US-B1- 6 456 438**

**Description**

La présente invention concerne des lunettes à affichage de données munies d'un écran anti-éblouissement.

Dans le domaine des dispositifs optiques portatifs munis de technologies liées au domaine de l'information et de la communication de données, il est connu des lunettes à affichage de données capables d'afficher des données ou des informations visibles par l'utilisateur qui les porte. Les informations sont superposées, par transparence ou non, à la scène qu'observe normalement l'utilisateur à travers les lunettes.

Un tel dispositif d'affichage est un dispositif optronique permettant à un utilisateur de visualiser des informations, telles que du texte, des images ou de la vidéo, dans son champ de vision, sans avoir besoin de tourner ou de baisser la tête. Ainsi, l'utilisateur peut se déplacer et observer son environnement, en ayant simultanément accès à des informations.

Ces informations peuvent concerner directement des objets et lieux qui sont vus à travers les lunettes, l'image pouvant être même interactive en ajoutant par exemple des signaux lumineux liés à la scène observée. Elles peuvent également être indépendantes de la vision instantanée de l'utilisateur, et fournir par exemple un accès à internet et/ou à une messagerie électronique, que l'utilisateur peut consulter tout en gardant une vision lui permettant de se déplacer ou d'agir librement.

Il existe des lunettes munies de technologies d'affichage différentes.

Dans la demande de brevet FR 2 976 089, est décrite une paire de lunettes comportant un ou deux projecteurs disposés sur les branches. Les projecteurs projettent une image devant le porteur des lunettes, celui-ci ayant besoin d'un support devant lui pour les percevoir. Comme cela est décrit dans la demande FR 2 941 786, les verres des lunettes peuvent servir de support, afin notamment de concevoir des lunettes à réalité augmentée.

Des systèmes d'affichages plus sophistiqués permettent de faire apparaître les images en utilisant des verres munis de faces guidant la lumière dans le verre, une image formée est visible par l'utilisateur, tel que cela est montré dans le brevet US 7 751 122.

Cependant, la difficulté des systèmes actuels concerne la visibilité des informations lorsque la luminosité est importante. En effet, dans ces conditions, le contraste des informations les rend peu ou plus visibles si l'intensité des informations n'est pas suffisante par rapport à une lumière incidente d'intensité élevée. De plus, lorsqu'un utilisateur se déplace, la luminosité est amenée à changer régulièrement et rapidement.

En outre, pour une paire de lunettes munie de verres solaires, ces verres nuisent à la visibilité des informations, notamment si elles sont en couleur. De plus, les verres solaires ne sont pas compatibles avec toutes les technologies d'affichage de données. D'autres lunettes conventionnelles sont divulguées dans US 2012/306940, WO2012/176201 et US 6 456 438.

Le but de l'invention est de remédier à ces inconvénients, et vise à fournir une paire de lunettes à affichage de données utilisable et adaptable à toutes les situations, quelle que soit l'intensité lumineuse ambiante.

Pour cela, les lunettes selon l'invention, qui sont définies dans la revendication indépendante 1 et sont munies d'au moins un verre et destinées à être portées par un utilisateur, comprennent des moyens d'affichage permettant de projeter des données dans un champ de vision de l'utilisateur, et un écran anti-éblouissement muni d'un coefficient de transmission variable permettant d'atténuer l'intensité d'une lumière incidente destinée à traverser le verre vers ledit utilisateur, lesdites lunettes étant configurées pour adapter le coefficient de transmission de l'écran anti-éblouissement en fonction de l'intensité de la lumière incidente.

Ainsi, les lunettes permettent, à partir d'un même support intégrant toutes les fonctions nécessaires, de lire les données affichées sur la zone d'affichage malgré une forte luminosité. En outre, quelle que soit la luminosité de la lumière incidente, elles offrent une adaptation du coefficient de transmission de l'écran pour que le porteur des lunettes perçoive une luminosité d'intensité modérée quelle que soit la situation.

La commande du coefficient de transmission de l'écran anti-éblouissement et/ou des moyens d'affichage pourra avoir lieu aussi bien à l'aide de moyens de commande intégrés aux lunettes que situés à distance. De même l'information relative à la luminosité pourra provenir d'un capteur situé sur les lunettes et/ou à distance.

Différents modes de réalisation sont définis dans les revendications dépendantes.

L'invention sera mieux comprise à la lumière de la description suivante qui n'est donnée qu'à titre indicatif et qui n'a pas pour but de la limiter, accompagnée des dessins joints parmi lesquels :

- la figure 1 illustre de façon schématique, une vue en perspective d'une paire de lunettes à affichage de données selon l'invention,
- la figure 2 illustre de façon schématique, le principe de fonctionnement d'un mode de réalisation des lunettes selon l'invention,
- la figure 3 montre un graphique représentant la transmission de la lumière de l'écran anti-éblouissement et un graphique représentant l'intensité des données affichées,
- la figure 4 illustre schématiquement une vue partielle en coupe, d'un véhicule dans lequel les lunettes sont utilisées.

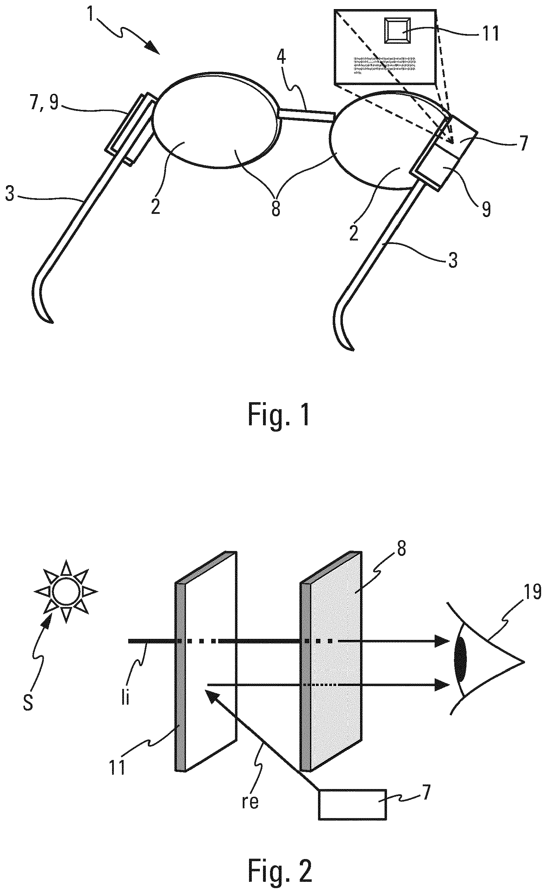

Comme illustré aux figures 1 et 2, les lunettes 1 selon l'invention ont ici deux verres 2, deux branches 3 et une monture 4 sur laquelle sont fixés les verres 2. Dans la description de l'invention, le terme verre désigne l'objet fixé à la monture et à travers lequel le porteur des lunettes regarde la scène qui est devant lui. Le verre 2 peut être fabriqué dans un matériau en verre minéral ou organique par exemple, mais aussi dans tout autre matériau connu de l'homme du métier à cette fin.

L'œil 19 du porteur des lunettes 1 est situé d'un premier côté des verres, et la scène qu'il observe est située d'un deuxième côté des verres. Ainsi, la lumière incidente li arrive sur les verres en venant du deuxième côté, puis les traverse par la face extérieure des verres, et ressort par la face intérieure vers le porteur des lunettes 1.

Les lunettes 1 comprennent des moyens d'affichage 7 de données en direction d'un champ de vision de l'utilisateur. Lesdits moyens d'affichage sont configurés pour émettre des rayons RE permettant l'affichage des données.

L'image contenant lesdites données se forme avantageusement au niveau d'un support virtuel, placé à quelques mètres ou à l'infini de façon à avoir une taille suffisante d'affichage desdites données.

Dans un premier mode de réalisation, les moyens d'affichage 7 de données comprennent un générateur d'images, ici disposé sur les branches 3.

Dans un second mode de réalisation, non illustré, les moyens d'affichage 7 de données sont configurés pour transmettre lesdits rayons à l'aide du verre. Les moyens d'affichage 7 comprennent alors, par exemple, une source de lumière apte à émettre dans le verre 2, et un substrat de transmission de sorte à guider les rayons par réflexion interne dans le verre.

Les lunettes 1 comportent en outre un écran anti-éblouissement 8. Avantageusement, ledit écran anti-éblouissement 8 et lesdits moyens d'affichage 7 sont positionnés les uns par rapport aux autres de manière à ce que des rayons émis par lesdits moyens d'affichage 7 pour afficher lesdites données, évitent ledit écran anti-éblouissement 8. On évitera alors les phénomènes de réflexion des rayons sur l'écran anti-éblouissement 8. Par exemple, l'écran anti-éblouissement 8 est disposé du premier côté du verre 2, par exemple sur la face intérieure des verres, en vis-à-vis du porteur des lunettes.

Pour diminuer l'éblouissement, l'écran anti-éblouissement 8 est muni d'un coefficient de transmission variable permettant d'atténuer l'intensité de la lumière incidente. Le coefficient de transmission est déterminé par modulation de largeur d'impulsions. La modulation est effectuée à fréquence fixe, de préférence à au moins 100 Hz, avec un rapport cyclique définissant le coefficient de transmission de l'écran.

L'écran anti-éblouissement 8 a donc un coefficient de transmission de la lumière qui varie périodiquement entre :

- une valeur maximale, pour laquelle la transparence est maximale pendant un temps $t_1$, et
- une valeur minimale, pour laquelle la transparence est minimale pendant un temps $t_2$.

Un rapport cyclique $\alpha$ est déterminé par le ratio entre la durée $t_1$ pendant laquelle la transmission est maximale, et la durée T de la période, et varie donc de 0 à 100 % :

$$\alpha = \frac{t_1}{T}$$

En modifiant le rapport cyclique, le temps $t_1$ pendant lequel la transparence est maximale est allongé ou raccourci, par rapport au temps $t_2$ pendant lequel la lumière ne passe pas. Ainsi, en augmentant $t_1$, le rapport cyclique augmente, et en augmentant $t_2$, le rapport cyclique diminue. En valeur moyenne, le coefficient de transmission est ainsi dépendant de la valeur du rapport cyclique $\alpha$.

La scène située devant le porteur des lunettes 1 n'est donc visible que pendant une fraction de temps égale au rapport cyclique $\alpha$. La luminosité apparente, à travers l'écran 8 à transmission variable, est donc diminuée par rapport à la luminosité réelle d'un facteur égal à $(1-\alpha)$.

En outre, lesdites lunettes 1 sont configurées pour adapter le coefficient de transmission de l'écran 8 en fonction de l'intensité de la lumière incidente. Les lunettes permettent de la sorte, en plus d'afficher des données pour l'utilisateur, de le protéger d'une luminosité importante. Par conséquent, l'utilisateur peut lire les données affichées, même par forte luminosité.

Pour cela, les lunettes 1 comprennent ici des moyens de commande 9 du coefficient de transmission, soit en valeur instantanée, soit en valeur moyenne. Par exemple, en choisissant un rapport cyclique déterminé, on définit un coefficient de transmission correspondant.

Ainsi, le rapport cyclique est variable et choisi en fonction de l'intensité lumineuse de la lumière incidente. Afin de mesurer l'intensité lumineuse de la lumière incidente, les lunettes 1 pourront comprendre un capteur de luminosité, non représenté, qui fournit la mesure aux moyens de commande 9. Les moyens de commande 9 déterminent la valeur du rapport cyclique en fonction de cette mesure.

Dans un premier mode de réalisation, l'écran anti-éblouissement 8 est muni d'une couche à polarisation verticale et d'une couche à polarisation horizontale, disposées sur le verre, ainsi qu'une couche à cristaux-liquides agencée entre les deux couches de polarisation. Les couches de polarisation polarisent chacune la lumière incidente dans une direction différente. Dans la couche à cristaux-liquides, la direction de la lumière polarisée est modifiée par les cristaux liquides. L'orientation des cristaux liquides détermine la direction de polarisation de la lumière. Ainsi lorsqu'ils sont orientés dans un sens qui modifie la polarisation dans une même direction que celle de la couche de polarisation qui suit, la lumière passe au travers. En revanche, si la direction est différente, la lumière n'est pas transmise au porteur des lunettes 1.

La modulation est effectuée en orientant les cristaux liquides dans la même direction que celle de la couche de polarisation suivante pendant le temps $t_1$, pour transmettre la lumière, puis en l'orientant dans une direction différente pendant le temps $t_2$, pour bloquer la lumière.

Dans un second mode de réalisation, l'écran anti-éblouissement 8 est muni d'une couche micro-électromécanique de type MEMS (pour micro-electro-mechanical system en anglais), disposée sur le verre 2. Cette couche est composée d'éléments microélectroniques actionnables électriquement, qui bloquent ou laissent passer la lumière incidente. Les systèmes micro électromécaniques, sont par exemple du type décrit dans le document US 7 684 105. Ici, la modulation est effectuée en laissant passer la lumière incidente pendant le temps $t_1$, et en la bloquant pendant le temps $t_2$, par actionnement de la couche micro-électromécanique.

Selon les différents modes de réalisation illustrés, les moyens d'affichage 7 et l'écran anti-éblouissement 8 sont en outre couplés de sorte que l'intensité lumineuse permettant l'affichage des données soit adaptée au coefficient de transmission pour être visible par le porteur.

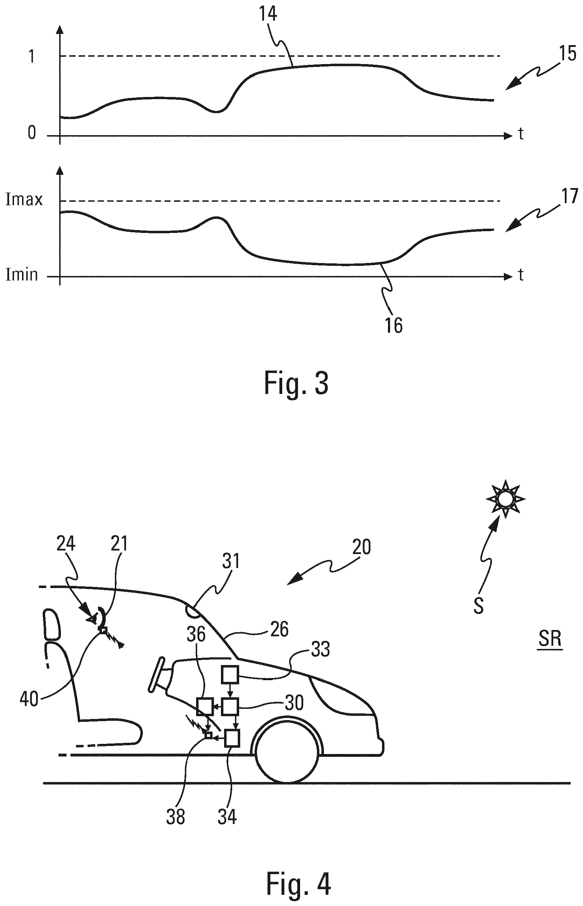

L'intensité d'affichage des moyens d'affichage 7 est corrélée à la valeur du coefficient de transmission de l'écran anti-éblouissement 8 dans le but de conserver la même quantité de lumière en provenance des données affichées, qui arrivent à l'œil du porteur des lunettes 1. Pour cela, selon un premier mode de réalisation, l'intensité lumineuse 16 des données affichées est modifiée de façon inversement proportionnelle au coefficient de transmission 14, afin d'obtenir une perception similaire des données par l'utilisateur, quelle que soit la lumière incidente, comme cela est représenté sur la figure 3, où deux graphiques 15, 17 sont superposés. Sur le graphique 15, le coefficient de transmission 14 varie entre 0 et 1 au cours du temps t. Sur le graphique 17, l'intensité lumineuse 16 varie entre une valeur minimale $I_{min}$ et une valeur maximale $I_{max}$ au cours du temps t. Lorsque la transmission de l'écran anti-éblouissement augmente, l'intensité lumineuse des données diminue proportionnellement, et réciproquement.

Autrement dit, les lunettes permettent simultanément une adaptation du coefficient de transmission de l'écran en fonction de l'intensité de la lumière incidente pour que le porteur des lunettes ne soit pas ébloui, et une adaptation de l'intensité lumineuse des données affichées sur la zone d'affichage en fonction du coefficient de transmission de l'écran, afin que ces données soient perceptibles de façon semblable quelle que soit la situation.

Ainsi, le couplage d'une paire de lunettes à affichage de données et d'un système anti-éblouissement permet de conserver un contraste suffisant des informations affichées, indépendamment du niveau lumineux ou du niveau d'éblouissement de la scène devant laquelle le porteur desdites lunettes se trouve.

Selon l'invention, l'intensité lumineuse des données affichées est aussi déterminée par modulation de largeur d'impulsions avec un rapport cyclique variable et une fréquence fixe. Les données apparaissent seulement pendant le temps $t_1$ à une intensité donnée de référence, les moyens d'affichage 7 n'affichant pas de données sur la zone d'affichage 11 pendant le temps $t_2$. L'intensité des données est contrôlée en faisant varier le coefficient $\alpha$, en augmentant ou diminuant le temps d'affichage $t_1$ par rapport à une durée T de période constante. Dans ce cas, les moyens de commande 9 commandent aussi le rapport cyclique de l'intensité lumineuse des données.

Pour corréler l'intensité lumineuse des données et le coefficient de transmission, l'intensité lumineuse et l'écran anti-éblouissement 8 sont en phase avec un ratio $\alpha$ identique. Ainsi, les données sont affichées lorsque l'écran anti-éblouissement 8 laisse passer la lumière, et ne le sont pas si l'écran anti-éblouissement 8 est opaque. Néanmoins, l'intensité de référence pourra être adaptée pour garder une intensité perçue semblable quelle que soit le ratio $\alpha$. Ainsi, si le temps $t_1$ augmente à cause d'une faible luminosité, l'intensité de référence est diminuée proportionnellement. De façon identique, si le temps $t_1$ diminue à cause d'une forte luminosité, l'intensité de référence est augmentée proportionnellement.

Dans une application spécifique décrite ci-dessous, les lunettes 1 sont utilisées comme dispositif d'aide à la conduite d'un véhicule automobile 20. Cette application est développée à titre d'exemple, mais ne limite pas l'application des lunettes 1 de l'invention à cet exemple.

Sur la figure 4, est représenté ce dispositif d'aide à la conduite utilisant des lunettes 21 conformes à l'invention, sans que cette application doive être considérée comme limitative.

On voit que par temps ensoleillé, notamment en fin de journée lorsque la hauteur du soleil S sur l'horizon est faible, la scène de route SR en avant du véhicule 20 est fortement éclairée. Le conducteur 24 risque donc non seulement d'être ébloui, mais peut aussi ne pas distinguer des détails de cette scène de route importants pour sa sécurité, par exemple des panneaux de signalisation avertissant de la proximité d'un danger, ou l'état de la chaussée sur laquelle il circule. Il en est de même pour la circulation nocturne, pendant laquelle le conducteur peut être ébloui par les feux des autres véhicules.

Les lunettes 21 servent alors à protéger le conducteur ou les passagers qui les portent, contre toute forme d'éblouissement ou de variation importante de l'intensité lumineuse incidente. Cependant, le conducteur 24 doit par exemple, avoir accès visuellement aux informations de pilotage, telles que celles affichées habituellement sur le tableau de bord, et qui ne sont pas accessibles si le coefficient de transmission en valeur moyenne est faible. Grâce à l'invention, ces informations sont directement affichées sur les lunettes 21, avec une intensité lumineuse déterminée pour qu'elles soient visibles par le porteur des lunettes 21.

L'invention prévoit donc dans cette application, de munir le conducteur 24 d'une paire de lunettes 21 adaptatives pour moduler la quantité de lumière atteignant l'œil du conducteur 19, et lui présenter simultanément des informations. Un seul verre de lunette a été représenté pour la clarté du dessin.

En outre, ce dispositif comprend des moyens de commande 30 du coefficient de transmission, qui sont ici situés à distance des lunettes 21. Lesdits moyens de commande 30 sont par exemple agencés dans l'habitacle du véhicule 20, et communiquent les ordres de commande aux lunettes 21.

Pour la commande du coefficient de transmission des verres de lunettes 21, l'invention prévoit d'utiliser un capteur photosensible 31 de mesure de la luminosité de la scène de route SR en avant du véhicule.

Le capteur photosensible 31 est ici situé, par exemple, sur la face intérieure du pare-brise 26 du véhicule 20, au niveau du rétroviseur intérieur (non représenté), c'est-à-dire au milieu de la partie supérieure du pare-brise 26. Cette position permet de recueillir une information particulièrement représentative de la luminosité extérieure au véhicule 20, issue de la scène de route SR.

Le signal de sortie SL de ce capteur photosensible 31 est reçu et traité par un circuit 33 apte à transformer ce signal de sortie SL en un signal de commande SC du coefficient de transmission des verres de lunette 21, ce signal SC étant à son tour reçu par les moyens de commande 30 du coefficient de transmission des verres de lunette 21.

Les moyens de commande 30 pilotent un circuit 34 de commande du coefficient de transmission des verres de lunettes 21, qui comprend lui-même un émetteur 38 par exemple d'ondes radio, infrarouges ou ultrasonores selon un protocole de communication sans fil, par exemple selon les normes Bluetooth ou Wi-Fi (marques déposées). Les lunettes 21 sont pourvues d'un récepteur 40 de ces mêmes ondes de télécommande OT.

A cet effet, en réponse au signal de sortie SL du capteur photosensible 31, représentatif de la luminosité de la scène de route SR devant le véhicule 20, le circuit 33 génère un signal de commande SC, fonction du signal SL. Le signal de commande SC est alors transmis par l'émetteur 38 du circuit de commande 34, via les ondes OT et le récepteur 40, aux lunettes 21.

Le coefficient de transmission des verres de lunettes 21 va ainsi être modulé en fonction du signal SC reçu, c'est-à-dire en fonction de la luminosité mesurée par le capteur 31.

Le dispositif comprend aussi des moyens de génération 36 des données à afficher, qui pourront également être situés dans l'habitacle, à distance des lunettes 21. Lesdits moyens de génération 36 communiquent lesdites données aux lunettes 21.

La communication entre les moyens de génération 36 des données et les lunettes 21 est aussi effectuée par communication sans fil, par exemple selon le même protocole que celui employé par les moyens de commande 30 et les lunettes 21, éventuellement avec le même émetteur 38 et/ou le même récepteur 40.

Ainsi, les moyens de génération 36 transmettent les données avec un ordre d'intensité donné, déterminé en fonction du coefficient de transmission défini par les moyens de commande 30.

## Revendications

1. Lunettes (1) munies d'au moins un verre (2) et destinées à être portées par un utilisateur dont l'œil est situé d'un premier côté du verre (2), lesdites lunettes (1) comprenant des moyens d'affichage (7) permettant de projeter des données dans un champ de vision de l'utilisateur, et un écran anti-éblouissement (8) muni d'un coefficient de transmission (14) variable permettant d'atténuer l'intensité d'une lumière incidente destinée à traverser le verre (2) vers ledit utilisateur, l'écran anti-éblouissement (8) étant disposé du premier côté du verre (2), la lumière incidente étant destinée à traverser le verre d'un deuxième côté du verre (2) vers le premier côté, lesdites lunettes étant telles que l'écran anti-éblouissement (8) et lesdits moyens d'affichage (7) sont positionnés les uns par rapport aux autres de manière à ce que des rayons émis par lesdits moyens d'affichage (7) pour afficher lesdites données, évitent ledit écran anti-éblouissement (8), et en ce qu'elles permettent simultanément d'adapter le coefficient de transmission de l'écran anti-éblouissement (8) en fonction de l'intensité de la lumière incidente pour que l'utilisateur ne soit pas ébloui, et d'adapter l'intensité lumineuse des données affichées sur la zone d'affichage en fonction du coefficient de transmission de l'écran, afin que ces données soient perceptibles de façon semblable quelle que soit la situation, **caractérisé en ce que** le coefficient de transmission (14) est déterminé par modulation de largeur d'impulsions avec un rapport cyclique variable et à fréquence fixe, **en ce que** l'intensité lumineuse (16) des données affichées est déterminée par modulation de largeur d'impulsions avec un rapport cyclique variable et à fréquence fixe, et ce que l'intensité lumineuse (16) et le coefficient de transmission (14) sont en phase et présentent le même rapport cyclique.

2. Lunettes selon la revendication 1, dans lesquelles les moyens d'affichage (7) sont couplés à l'écran anti-éblouissement (8) de sorte que l'intensité lumineuse (16) des données affichées soit adaptée au coefficient de transmission (14).

3. Lunettes selon la revendication 2, dans lesquelles le couplage est produit en commandant l'intensité lumineuse (16) des données affichées en fonction du coefficient de transmission (14) de l'écran anti-

ébouissement (8), l'intensité lumineuse (16) des données affichées étant modifiée de façon inversement proportionnelle au coefficient de transmission (14), afin d'obtenir une perception similaire des données par l'utilisateur quelle que soit la lumière incidente.

4. Lunettes selon l'une quelconque des revendication 1 à 3, dans lesquelles les lunettes (1) comprennent des moyens de commande (9) du ou des rapports cycliques.

5. Lunettes selon l'une quelconque des revendications précédentes, dans lesquelles l'écran anti-éblouissement (8) est porté par le verre (2).

6. Lunettes selon l'une quelconque des revendications précédentes, dans lesquelles ledit écran anti-éblouissement (8) est muni d'une couche à polarisation verticale et d'une couche à polarisation horizontale, disposées sur le verre (2).

7. Lunettes selon la revendication 5, dans lesquelles ledit écran anti-éblouissement (8) est muni d'une couche à cristaux-liquides agencée entre les deux couches de polarisation.

8. Lunettes selon l'une quelconque des revendications précédentes, dans lesquelles les moyens d'affichage (7) de données comportent un substrat de transmission de sorte à guider la lumière, en particulier lesdits rayons, par réflexion interne dans le verre (2).

9. Lunettes selon la revendication 8, dans lesquelles les moyens d'affichage de données comprennent une source de lumière apte à émettre lesdits rayons dans le verre (2).

10. Dispositif d'aide à la conduite, notamment nocturne, de véhicule automobile (20) comprenant des lunettes (1) selon l'une quelconque des revendications précédentes.

**Patentansprüche**

1. Brille (1), die mit wenigstens einem Glas (2) versehen und dazu bestimmt ist, von einem Benutzer getragen zu werden, dessen Auge sich auf einer ersten Seite des Glases (2) befindet, wobei die Brille (1) Anzeigemittel (7), die es ermöglichen, Daten in ein Sichtfeld des Benutzers zu projizieren, und einen Blendschutzschirm (8) mit einem variablen Transmissionskoeffizienten (14) umfasst, der es ermöglicht, die Intensität eines einfallenden Lichts zu dämpfen, das dazu bestimmt ist, das Glas (2) hin zum Benutzer zu durchqueren, wobei der Blendschutzschirm (8) auf der ersten Seite des Glases (2) angeordnet ist, wobei das einfallende Licht dazu bestimmt ist, das Glas von einer zweiten Seite des Glases (2) hin zur ersten Seite zu durchqueren, wobei die Brille so beschaffen ist, dass der Blendschutzschirm (8) und die Anzeigemittel (7) bezogen aufeinander so positioniert sind, dass die Strahlen, die von den Anzeigemitteln (7) ausgesendet werden, um die Daten anzuzeigen, den Blendschutzschirm (8) vermeiden, und dadurch, dass sie es gleichzeitig ermöglicht, den Transmissionskoeffizienten des Blendschutzschirms (8) in Abhängigkeit von der Intensität des einfallenden Lichts anzupassen, damit der Benutzer nicht geblendet wird, und die Lichtintensität der Daten, die auf dem Anzeigebereich angezeigt werden, je nach dem Transmissionskoeffizienten des Schirms anzupassen, damit diese Daten ganz gleich in welcher Situation auf ähnliche Weise wahrnehmbar sind, **dadurch gekennzeichnet, dass** der Transmissionskoeffizient (14) durch Pulsweitenmodulation mit einem variablen und Festfrequenz-Tastverhältnis bestimmt wird, dadurch, dass die Lichtintensität (16) der angezeigten Daten durch Pulsweitenmodulation mit einem variablen und Festfrequenz-Tastverhältnis bestimmt wird, und dadurch, dass die Lichtintensität (16) und der Transmissionskoeffizient (14) phasengleich sind und dasselbe Tastverhältnis aufweisen.

2. Brille nach Anspruch 1, wobei die Anzeigemittel (7) so mit dem Blendschutzschirm (8) gekoppelt sind, dass die Lichtintensität (16) der angezeigten Daten an den Transmissionskoeffizienten (14) angepasst ist.

3. Brille nach Anspruch 2, wobei die Kopplung herbeigeführt wird, indem die Lichtintensität (16) der angezeigten Daten in Abhängigkeit vom Transmissionskoeffizienten (14) des Blendschutzschirms (8) gesteuert wird, wobei die Lichtintensität (16) der angezeigten Daten umgekehrt proportional zum Transmissionskoeffizienten (14) verändert wird, um eine ähnliche Wahrnehmung der Daten durch den Benutzer ganz gleich bei welchem einfallenden Licht zu erzielen.

4. Brille nach einem der Ansprüche 1 bis 3, wobei die Brille (1) Mittel zur Steuerung (9) des oder der Tastverhältnisse umfasst.

5. Brille nach einem der vorhergehenden Ansprüche, wobei der Blendschutzschirm (8) vom Glas (2) getragen wird.

6. Brille nach einem der vorhergehenden Ansprüche, wobei der Blendschutzschirm (8) mit einer Schicht mit vertikaler Polarisation und einer Schicht mit horizontaler Polarisation versehen ist, die auf dem Glas (2) angeordnet sind.

**7.** Brille nach Anspruch 5, wobei der Blendschutzschirm (8) mit einer Flüssigkristallschicht versehen ist, die zwischen den zwei Polarisationsschichten angeordnet ist.

**8.** Brille nach einem der vorhergehenden Ansprüche, wobei die Mittel zur Anzeige (7) von Daten ein Transmissionssubstrat aufweisen, damit das Licht, insbesondere die Strahlen, durch innere Reflexion im Glas (2) geleitet werden.

**9.** Brille nach Anspruch 8, wobei die Mittel zur Anzeige von Daten eine Lichtquelle umfassen, die geeignet ist, die Strahlen in das Glas auszusenden (2).

**10.** Assistenzvorrichtung zum Fahren, insbesondere bei Nacht, eines Kraftfahrzeugs (20), umfassend eine Brille (1) nach einem der vorhergehenden Ansprüche.

**Claims**

**1.** Glasses (1) equipped with at least one lens (2) and intended to be worn by a user the eye of whom is located on a first side of the lens (2), said glasses (1) comprising displaying means (7) allowing data to be projected into a field of view of the user, and an anti-glare screen (8) provided with a variable transmission coefficient (14) allowing the intensity of incident light intended to pass through the lens (2) toward said user to be attenuated, the anti-glare screen (8) being placed on the first side of the lens (2), the incident light being intended to pass through the lens from a second side of the lens (2) to the first side, said glasses being such that the anti-glare screen (8) and said displaying means (7) are positioned one relative to the other so that rays emitted by said displaying means (7), in order to display said data, avoid said anti-glare screen (8), and in that they simultaneously allow the transmission coefficient of the anti-glare screen (8) to be adapted depending on the intensity of the incident light so that the user is not dazzled, and the light intensity of the data displayed in the display zone to be adapted depending on the transmission coefficient of the screen, in order for these data to be perceivable in a similar way whatever the situation, **characterized in that** the transmission coefficient (14) is determined by pulse width modulation with a variable duty cycle and a fixed frequency, **in that** the light intensity (16) of the displayed data is determined by pulse width modulation with a variable duty cycle and a fixed frequency, and **in that** the light intensity (16) and the transmission coefficient (14) are in phase and have the same duty cycle.

**2.** Glasses according to Claim 1, in which the displaying means (7) are coupled to the anti-glare screen (8) so that the light intensity (16) of the displayed data is adapted to the transmission coefficient (14).

**3.** Glasses according to Claim 2, in which the coupling is produced by controlling the light intensity (16) of the displayed data depending on the transmission coefficient (14) of the anti-glare screen (8), the light intensity (16) of the displayed data being modified inversely proportionally to the transmission coefficient (14), in order to obtain a similar perception of the data by the user whatever the amount of incident light.

**4.** Glasses according to any one of Claims 1 to 3, in which the glasses (1) comprise means (9) for controlling the duty cycle or duty cycles.

**5.** Glasses according to any one of the preceding claims, in which the anti-glare screen (8) is borne by the lens (2).

**6.** Glasses according to any one of the preceding claims, in which said anti-glare screen (8) is provided with a vertical polarization layer and a horizontal polarization layer, which are placed on the lens (2).

**7.** Glasses according to Claim 5, in which said anti-glare screen (8) is provided with a liquid-crystal layer arranged between the two polarization layers.

**8.** Glasses according to any one of the preceding claims, in which the means (7) for displaying data comprise a transmitting substrate so as to guide light, in particular said rays, by internal reflection in the lens (2).

**9.** Glasses according to Claim 8, in which the means for displaying data comprise a light source able to emit said rays into the lens (2).

**10.** Device for assisting with driving, especially at night, an automotive vehicle (20), comprising glasses (1) according to any one of the preceding claims.

Fig. 1

Fig. 2

Fig. 3

Fig. 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2976089
- FR 2941786
- US 7751122 B
- US 2012306940 A
- WO 2012176201 A
- US 6456438 B
- US 7684105 B